# FASCICULE DE BREVET EUROPEEN

(11) **EP 0 586 307 B1**
(45) Date de publication et mention de la délivrance du brevet: **15.01.1997**
(21) Numéro de dépôt: 93402145.2
(22) Date de dépôt: 02.09.1993
(51) Int. Cl.: G21F 7/005, B25J 19/06

(54) **Mécanisme de commande centralisé à sécurités incorporées, pour un dispositif de transfert étanche entre deux volumes clos**
Zentralisierter Steuermechanismus mit eingebauten Sicherheiten zur Verwendung in einer abgedichteten Übertragungseinrichtung zwischen zwei geschlossenen Räumen
Centralised controlmechanism with incorporated security means used in an airtight transfer device between two enclosures

(30) Priorité: 04.09.1992 FR 9210575
(43) Date de publication de la demande: 09.03.1994
(73) Titulaire: SNE LA CALHENE, F-78142 Velizy-Villacoublay Cedex (FR)
(72) Inventeur: Glachet, Charles, F-41100 Vendome (FR)
(74) Mandataire: Poulin, Gérard

(56) Documents cités:
- EP-A- 0 054 494
- FR-A- 2 040 616
- FR-A- 2 441 243
- GB-A- 2 102 719
- GB-A- 2 218 663

## Description

L'invention concerne un mécanisme de commande centralisé, à sécurités incorporées, conçu pour être utilisé dans un dispositif à double porte, permettant d'assurer un transfert étanche entre deux volumes clos, après accostage de ces deux volumes et ouverture de la double porte.

Dans un certain nombre de secteurs industriels, parmi lesquels on citera à titre d'exemples les industries nucléaire, médicale, pharmaceutique et électronique, il est nécessaire ou désirable d'effectuer certaines tâches dans une atmosphère confinée, soit afin de protéger le personnel vis-à-vis de certains dangers (radioactivité, toxicité, etc.) présentés par les produits mis en oeuvre lors de l'exécution de ces tâches, soit au contraire afin de pouvoir effectuer ces tâches dans une atmosphère aseptique ou exempte de poussière.

Dans ces différents secteurs industriels, le transfert d'appareils ou de produits d'un volume clos à un autre, sans qu'à aucun moment l'étanchéité de chacun de ces volumes vis-à-vis de l'extérieur soit rompue, pose un problème délicat à résoudre. Ce problème est généralement résolu au moyen de dispositifs de transfert étanches à double porte, dont les différents composants sont équipés de systèmes de joints qui préservent les étanchéités à tous les stades des opérations de raccordement et de séparation des volumes clos.

Ces dispositifs de transfert étanches comprennent généralement deux brides délimitant dans les parois des deux volumes à raccorder des ouvertures circulaires normalement obturées par des portes. Lorsqu'une communication doit être établie entre les deux volumes, les deux brides sont accolées l'une à l'autre et solidarisées sous l'effet d'un mouvement de rotation relatif, par une liaison à baïonnette. Ce mouvement de rotation a aussi pour effet de solidariser les deux portes entre elles par une autre liaison à baionnette.

Les dispositifs de transfert étanches à double porte comprennent aussi des organes de commande, manipulables depuis l'intérieur de l'un des deux volumes, à l'aide de moyens de commande à distance tels que des télémanipulateurs ou des gants, afin d'ouvrir la double porte pour mettre les deux volumes en communication. En outre, un certain nombre de dispositifs de sécurité sont prévus afin d'éviter que des manoeuvres inadaptées ne conduisent à aucun moment à un risque de rupture de l'étanchéité des volumes clos.

Comme l'illustre notamment le document EP-A-054 494 correspondant de FR-A-2 496 325, les mécanismes permettant de commander l'ouverture et la fermeture de la double porte et les dispositifs de sécurité sont habituellement dissociés les uns des autres et répartis en des emplacements différents sur tout le pourtour des brides. Cela conduit à accroître de façon conséquente la complexité de ces dispositifs de transfert étanches à double porte et, par conséquent, à en augmenter le coût et à en réduire la fiabilité.

L'invention a précisément pour objet un mécanisme de commande centralisé, à sécurités incorporées, prévu pour être implanté sur un dispositif de transfert étanche à double porte, de façon à obtenir un dispositif particulièrement simple, peu coûteux et fiable.

Conformément à l'invention, ce résultat est obtenu au moyen d'un mécanisme de commande centralisé, à sécurités incorporées, conforme à la revendication 1.

Selon un premier mode de réalisation de l'invention, le premier verrou comprend un premier organe de blocage mobile supporté par la première porte du côté opposé à la deuxième porte, cet organe de blocage comportant une première tige de commande qui traverse la première porte, et une partie de blocage apte à coopérer avec une partie complémentaire de l'organe de commande, lorsque cet organe occupe sa position de fermeture et lorsque la deuxième porte ne repousse pas la tige de commande, pour assurer le blocage de l'organe de commande.

Par ailleurs, le deuxième verrou comprend avantageusement une première tige de blocage montée coulissante dans un alésage de l'organe de commande ; un premier moyen élastique tendant à déplacer cette tige de blocage vers la première bride, de façon à l'introduire partiellement dans un alésage traversant formé dans cette bride, lorsque l'organe de commande occupe sa position de fermeture ; et une deuxième tige de commande montée coulissante dans cet alésage traversant, de façon à faire saillie sur une face de la première bride tournée vers la deuxième bride, en un emplacement tel que cette tige de commande n'est repoussée, pour autoriser une rotation de l'organe de commande, que lorsque la première liaison à baionnette est verrouillée.

Dans le mode de réalisation préféré de l'invention, le troisième verrou comprend une deuxième tige de blocage montée coulissante dans un deuxième alésage de la première bride, des deuxièmes moyens élastiques appliquant une extrémité de cette deuxième tige de blocage contre une surface de came formée sur l'organe de commande, de telle sorte que l'extrémité opposée de la deuxième tige de blocage soit effacée dans le deuxième alésage lorsque l'organe de commande est en position de fermeture, et fasse saillie sur une face de la première bride tournée vers la deuxième bride, en un emplacement tel qu'elle bloque la première liaison à baïonnette dans un état verrouillé, lorsque l'organe de commande se trouve entre les positions de verrouillage et d'ouverture, ou dans une de ces positions.

En outre, le quatrième verrou comprend avantageusement un doigt de blocage monté coulissant dans un troisième alésage de la première bride, des troisièmes moyens élastiques tendant à appliquer le doigt de blocage contre une face en regard de l'organe de commande, une rainure de piégeage formée dans cette face en regard, de façon à se trouver en face du doigt de blocage lorsque l'organe de commande se trouve entre les positions de verrouillage et d'ouverture ou dans l'une de ces positions, et une surface d'appui liée à la première porte, maintenant le doigt de blocage en totalité dans le troisième alésage tant que la première porte n'est pas décollée de la première bride.

De préférence, le système de rampes comprend deux rampes parallèles en vis-à-vis, liées à la première porte, et un galet porté par l'organe de commande et coopérant simultanément avec ces deux rampes parallèles.

La surface d'appui du quatrième verrou ainsi que les rampes parallèles du système de rampes sont formées avantageusement sur une pièce apte à être fixée sur une face de la première porte opposée à la deuxième porte, cette pièce supportant également le premier verrou.

Dans le mode de réalisation préféré de l'invention, l'organe de commande est un organe pivotant, monté sur une face de la première bride opposée à la deuxième bride par un axe de pivotement. Il est à noter cependant que l'organe de commande pourrait aussi être constitué par un organe mobile en translation.

En outre, bien qu'une commande motorisée de l'organe de commande puisse aussi être utilisée, celui-ci est avantageusement muni d'un levier de commande manuel.

On décrira à présent, à titre d'exemple non limitatif, un mode de réalisation préféré de l'invention, en se référant aux dessins annexés, dans lesquels :
- la figure 1 est une vue en coupe transversale illustrant schématiquement le raccordement d'un conteneur sur une cellule au moyen d'un dispositif de transfert étanche à double porte équipé d'un mécanisme de commande centralisé conforme à l'invention ;
- la figure 2 est une vue de face, depuis l'intérieur de la cellule, du mécanisme de commande centralisé, représenté dans sa position de fermeture ;
- la figure 3 est une vue en coupe selon la ligne III-III de la figure 2 ;
- la figure 4 est une vue en coupe selon la ligne IV-IV de la figure 2 ;
- la figure 5 est une vue en coupe selon la ligne V-V de la figure 2 ;
- la figure 6 est une vue de face, comparable à la figure 2, du mécanisme de commande centralisé, représenté dans sa position intermédiaire de verrouillage ;
- la figure 7 est une vue en coupe selon la ligne VII-VII de la figure 6 ;
- la figure 8 est une vue en coupe selon la ligne VIII-VIII de la figure 6 ;
- la figure 9 est une vue en coupe comparable à la figure 4, illustrant le déverrouillage de l'organe de commande lors de la solidarisation des deux brides ;
- la figure 10 est une vue en coupe comparable à la figure 5, illustrant le blocage de la liaison à baîonnette reliant les deux brides, lorsque l'organe de commande atteint la position intermédiaire de verrouillage ; et
- la figure 11 est une vue en coupe comparable à la figure 3, illustrant le déverrouillage de l'organe de commande lors de l'accostage de la porte de conteneur et le blocage de l'organe de commande empêchant son retour vers la position de fermeture, après décollement de la double porte.

Dans le mode de réalisation préféré de l'invention illustré sur les figures, les deux volumes clos que l'on désire relier à l'aide d'un dispositif de transfert étanche à double porte muni du mécanisme de commande centralisé à sécurités incorporées conforme à l'invention correspondent respectivement à une cellule de confinement 10 et à un conteneur de transport 12. On comprendra cependant que l'invention est aussi applicable dans le cas où les volumes clos présenteraient des formes différentes.

La cellule 10 est délimitée par une paroi 14 dont une partie seulement est visible sur les figures. Elle est équipée, de façon classique, de moyens de manipulation à distance tels que des télémanipulateurs et/ou des gants (non représentés) solidaires de la paroi 14, grâce auxquels le mécanisme de commande centralisé conforme à l'invention peut être manoeuvré depuis l'intérieur de cette cellule 10.

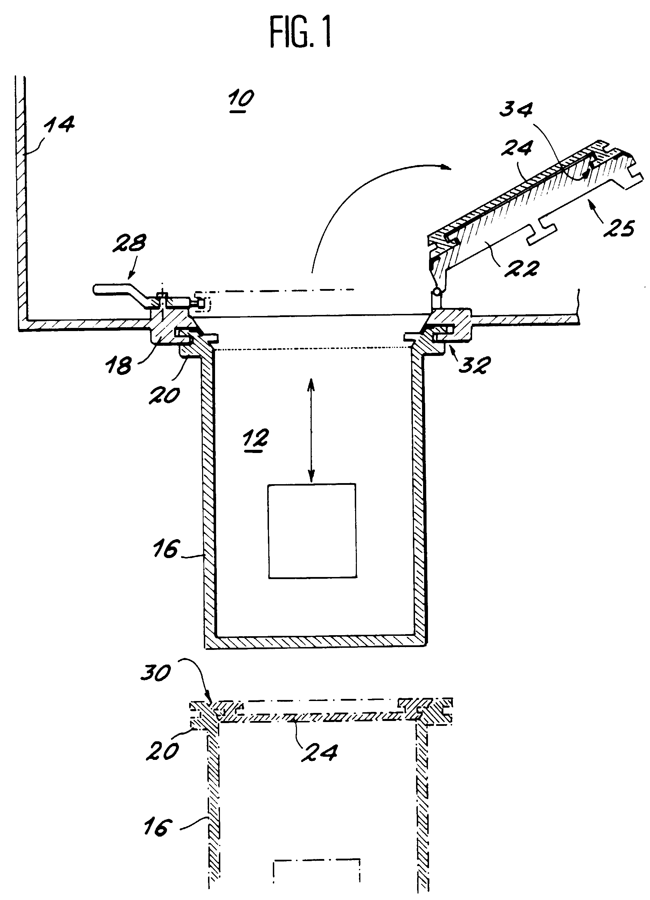

Le conteneur 12 est également délimité par une paroi 16, comme l'illustre notamment la figure 1.

Le dispositif de transfert étanche à double porte dans lequel est utilisé le mécanisme de commande centralisé conforme à l'invention comprend principalement une bride de cellule 18, une bride de conteneur 20, une porte de cellule 22 obturant normalement une ouverture circulaire délimitée par la bride de cellule 18, et une porte de conteneur 24 obturant normalement une ouverture délimitée par la bride de conteneur 20. La bride de cellule 18 et la bride de conteneur 20 sont fixées respectivement sur la paroi 14 de la cellule 10 et sur la paroi 16 du conteneur 12.

La porte de cellule 22 est articulée sur la bride de cellule 18 par une charnière 26. En un emplacement diamétralement opposé par rapport à cette charnière 26, un mécanisme de commande centralisé, désigné de façon générale par la référence 28, permet conformément à l'invention de commander l'ouverture et la fermeture des portes 22 et 24, ainsi que des sécurités incorporées à ce mécanisme 28, lorsque le conteneur 12 a été monté sur la cellule 10.

La fixation de la porte de conteneur 24 sur la bride de conteneur 20 est assurée de façon classique par une liaison à baïonnette 30.

Pour permettre la solidarisation de la bride de conteneur 20 sur la bride de cellule 18 et la solidarisation de la porte de conteneur 24 sur la porte de cellule 22, le dispositif de transfert étanche à double porte comprend également, de façon connue, deux autres liaisons à baîonnette désignées respectivement par les références 32 et 34.

D'une manière classique, les trois liaisons à baîonnette 30, 32 et 34 sont agencées de telle sorte qu'après accostage de la bride de conteneur 20 sur la bride de cellule 18, une rotation du conteneur 12 autour de son axe, dans le sens des aiguilles d'une montre, a pour effet de solidariser la bride de conteneur 20 de la bride de cellule 18, de solidariser la porte de conteneur 24 de la porte de cellule 22, et de désolidariser la porte de conteneur 24 de la bride de conteneur 20. Ces deux dernières opérations s'effectuent de façon consécutive, de telle sorte que l'ouverture du conteneur n'intervient qu'après que la porte de conteneur 24 ait été solidarisée de la porte de cellule 22 pour former une double porte 25.

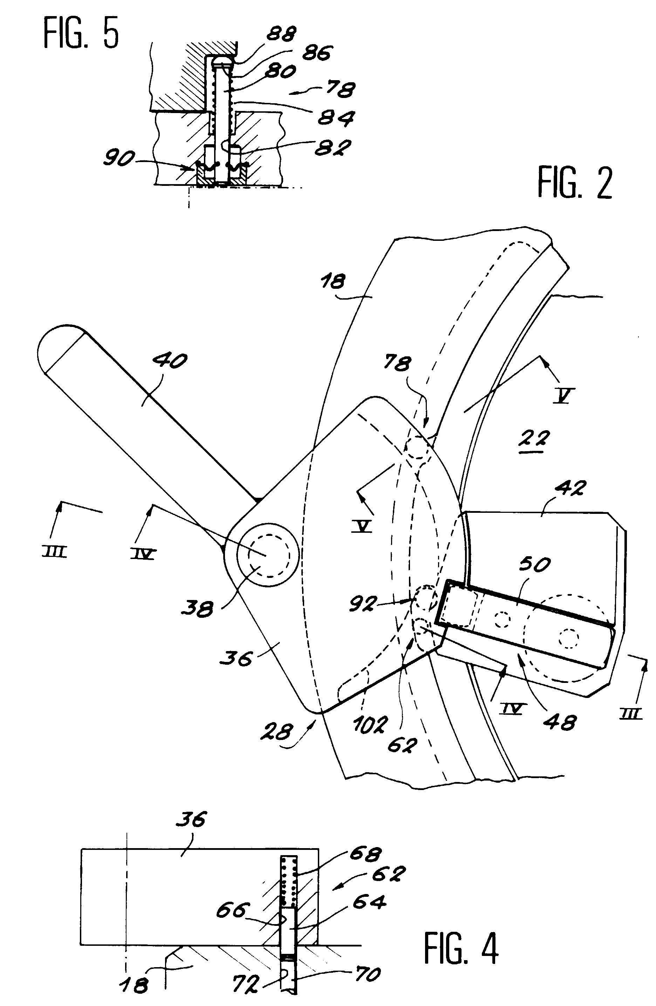

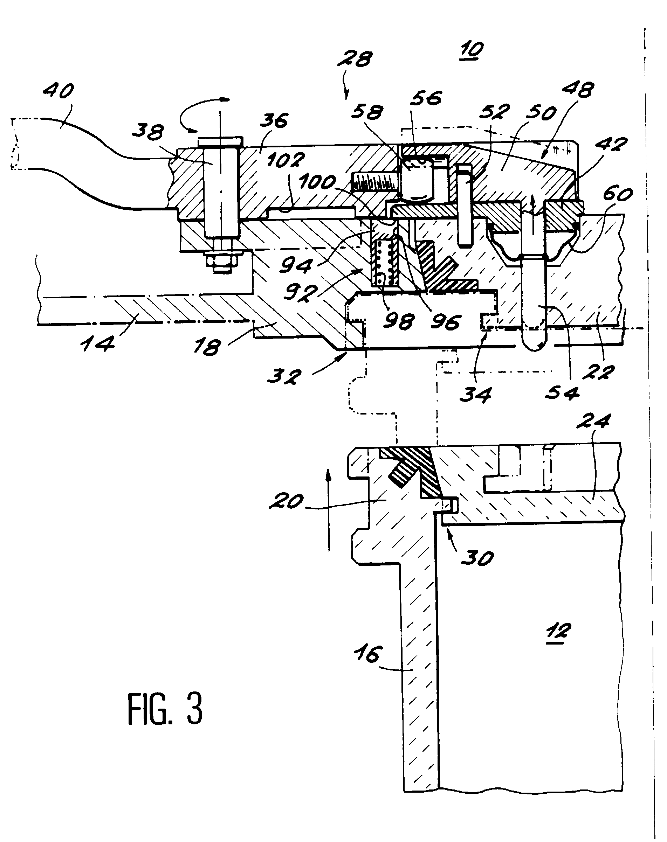

Le mécanisme de commande centralisé 28, à sécurités intégrées, va à présent être décrit en détail en se référant aux figures 2 à 11.

Ce mécanisme de commande 28 comprend tout d'abord un organe de commande mobile 36, articulé sur la bride de cellule 18 autour d'un axe 38 dans le mode de réalisation représenté. Plus précisément, l'axe 38 est orienté parallèlement à l'axe de l'ouverture circulaire délimitée par la bride 18 et l'organe de commande mobile 36 est en contact avec la face de cette bride 18 tournée vers l'intérieur de la cellule 10. L'organe de commande mobile 36 est équipé d'un levier ou d'une poignée 40 permettant d'en commander manuellement la rotation.

Dans une variante de réalisation non représentée, la rotation de l'organe de commande 36 est assurée d'une manière automatisée par une motorisation placée à l'intérieur de la cellule 10. Dans ce cas, la commande de cette motorisation peut être directement accessible depuis l'extérieur de la cellule, sans avoir recours à des moyens de manipulation à distance.

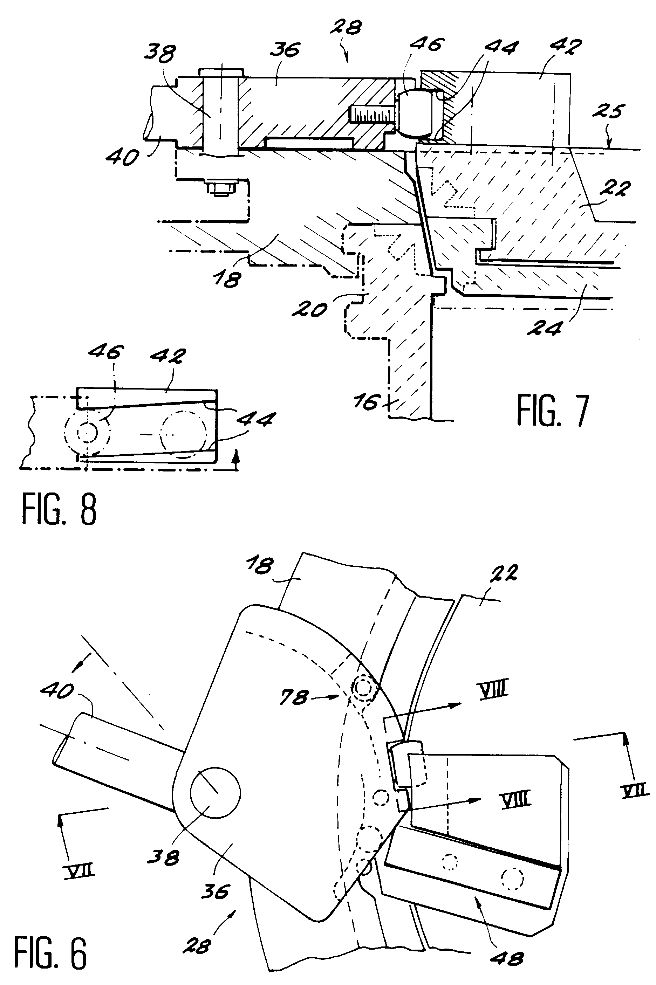

Le mécanisme de commande centralisé comprend de plus, en face de l'organe de commande 36, une pièce 42 qui est fixée sur la face de la porte de cellule 22 tournée vers l'intérieur de la cellule 10. Comme le montrent plus précisément les figures 7 et 8, cette pièce 42 comporte, sur son bord extérieur tourné vers l'organe de commande 36, une rainure dont les bords opposés forment deux rampes parallèles 44 en vis-à-vis. Ces deux rampes 44 assurent le guidage d'un galet rotatif 46 dont l'axe est fixé sur le bord de l'organe de commande 36 tourné vers la pièce 42, et orienté radialement par rapport à l'axe de rotation 38 de cet organe 36.

L'agencement qui vient d'être décrit permet de commander le décollement ou l'arrachement de la double porte 25 par une rotation de l'organe de commande 36 dans le sens inverse des aiguilles d'une montre en considérant les figures 2 et 6, et la fermeture de la double porte par une rotation inverse de l'organe de commande 36.

Le mécanisme de commande 28 centralisé conforme à l'invention comprend de plus un certain nombre de sécurités incorporées, matérialisées par des verrous qui vont à présent être décrits.

Un premier verrou 48 (figures 2, 3 et 11) a pour fonction de bloquer l'organe de commande 36 dans une position extrème de fermeture, dans laquelle la porte de cellule 22 obture de façon étanche la bride de cellule 18. Ce premier verrou 48 comprend un organe de blocage mobile 50 qui est monté sur la pièce 42 de façon à pouvoir se déplacer parallèlement à l'axe de la porte de cellule 22 supportant cette pièce 42, entre une position normale de blocage de l'organe de commande 36 et une position de déverrouillage de cet organe. Ce guidage est assuré par une tige 52, fixée dans la porte de cellule 22 et dans la pièce 42 parallèlement à l'axe de la porte de cellule et par une tige de commande 54, solidaire de l'organe de blocage mobile 50 et qui traverse la pièce 42 ainsi que la porte de cellule 22 parallèlement à l'axe de cette dernière.

En l'absence de la porte de conteneur 24, c'est-à-dire lorsque l'organe de blocage mobile 50 occupe sa position de blocage illustrée sur la figure 3, la tige 54 fait normalement saillie sur la face de la porte de cellule 22 tournée vers l'extérieur de la cellule, sous l'effet d'un ressort (non représenté). Dans ces conditions, une partie de blocage 56 de l'organe de blocage 50 coopère avec une partie complémentaire de l'organe de commande 36 pour immobiliser ce dernier dans sa position de fermeture. Dans la forme de réalisation illustrée sur les figures, la partie de blocage 56 est constituée par une extrémité extérieure de l'organe de blocage 50, qui fait saillie au-delà du bord extérieur de la pièce 42, de façon à pouvoir pénétrer dans une encoche 58 formée dans le bord intérieur de l'organe de commande 36, et qui constitue la partie complémentaire précitée.

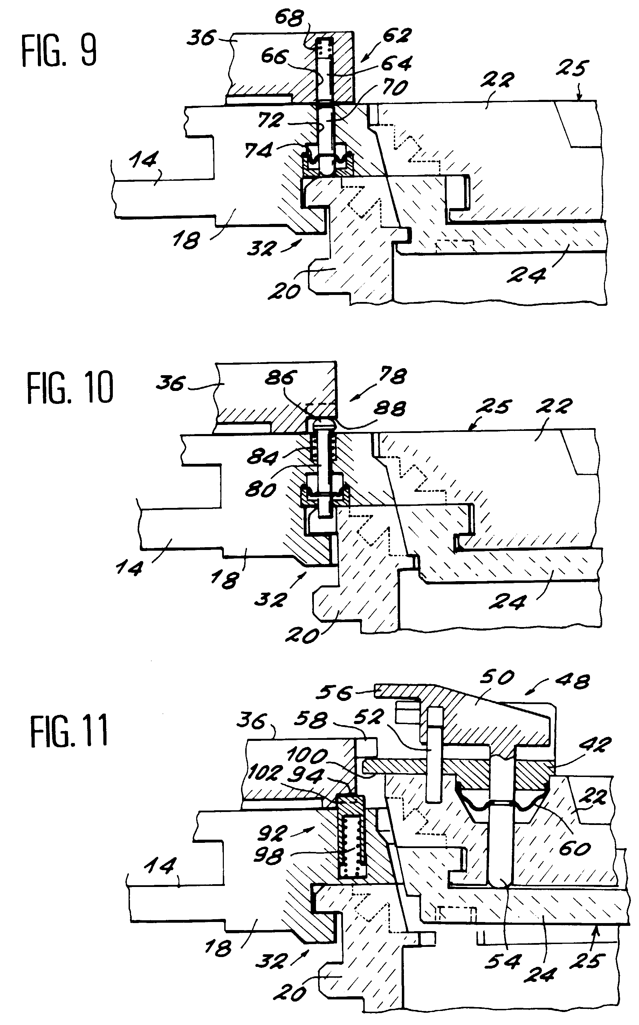

Lorsqu'un conteneur 12 équipé de sa porte de conteneur 24 est accosté sur la bride de cellule 18, la porte de conteneur vient en appui sur l'extrémité de la tige de commande 54, ce qui a pour effet de repousser l'organe de blocage 50 vers l'intérieur de la cellule 10, à l'encontre du ressort (non représenté). Le premier verrou 48 se trouve alors dans son état déverrouillé car la partie de blocage 56 est dégagée de l'encoche 58, comme l'illustre la figure 11.

Comme l'illustrent aussi les figures 3 et 11, l'étanchéité de la porte de cellule 22 est avantageusement préservée en plaçant entre celle-ci et la tige de commande 54 qui la traverse un organe d'étanchéité 60.

Les sécurités incorporées dans le mécanisme de commande centralisé 28 comprennent également un deuxième verrou 62 (figures 2, 4 et 9) qui a pour fonction de maintenir l'organe de commande mobile 36 bloqué dans son état de fermeture tant que la bride de conteneur 20 n'est pas complètement solidarisée de la bride de cellule 18 par la liaison à baïonnette 32.

Ce deuxième verrou 62 comprend tout d'abord une tige de blocage 64, qui est montée coulissante dans un alésage borgne 66 formé dans l'organe de commande 36 parallèlement à son axe de pivotement 38. L'extrémité ouverte de cet alésage borgne 66 est tournée vers la bride de cellule 18 et un ressort hélicoïdal de compression 68 est placé entre la tige de blocage 64 et le fond de l'alésage 66. Ce ressort 68 maintient en permanence la tige de blocage 64 en appui contre la face de la bride de cellule 18 tournée vers l'intérieur de la cellule 10.

Le deuxième verrou 62 comprend également une tige de commande 70 reçue de façon coulissante dans un alésage traversant 72 usiné dans la bride de cellule 18, parallèlement à l'axe de l'ouverture délimitée par cette bride. Cet alésage traversant 72 présente un diamètre identique à celui de l'alésage borgne 66 et il est aligné avec ce dernier lorsque l'organe de commande 36 occupe la position de fermeture définie précédemment.

Dans ces conditions et comme l'illustre la figure 4, le ressort 68 repousse simultanément les tiges 64 et 70, de telle sorte que la tige 64 soit partiellement située dans chacun de ces deux alésages. Cette position de blocage est déterminée par une butée de fin de course (non représentée) de la tige 70. La position alors occupée par la tige de blocage 64 a pour effet de s'opposer à toute rotation de l'organe de commande 36 autour de son axe 38. Un organe d'étanchéité 74 (figure 9) est interposé entre la tige 70 et la bride de cellule 18, pour préserver l'étanchéité de cette dernière.

Dans la position de blocage de l'organe de commande 36 par le deuxième verrou 62, l'extrémité de la tige de commande 70 tournée vers l'extérieur de la cellule 10 fait saillie au-delà d'une face de la bride de cellule 18 débouchant dans une rainure de cette bride apte à recevoir une oreille de la bride de conteneur 20, cette rainure et cette oreille appartenant à la liaison à baïonnette 32. Plus précisément, la tige 70 fait alors saillie dans la rainure précitée en un emplacement tel que l'ensemble formé par les deux tiges 70 et 64 n'est repoussé à l'encontre du ressort 68 que lorsque la liaison à baîonnette 32 est totalement verrouillée.

Lorsque la solidarisation des deux brides 20 et 18 à l'aide de la liaison à baïonnette 32 est complète, les deux tiges 70 et 64 sont repoussées à l'encontre du ressort 68 de telle sorte que le plan de joint entre ces deux tiges se trouve confondu avec le plan de joint entre la bride de cellule 18 et l'organe de commande mobile 36, comme l'illustre la figure 9. Par conséquent, la rotation de l'organe 36 autour de son axe 38 est alors autorisée.

Les verrous 48 et 62 constituent des sécurités complémentaires qui permettent d'éviter une ouverture intempestive de la porte de cellule 22 respectivement si un conteneur dépourvu de porte est accosté sur la bride de cellule 18 et si la solidarisation de la bride de conteneur 20 sur la bride de cellule 18 à l'aide de la liaison à baionnette 32 n'est pas complète.

Les sécurités incorporées dans le mécanisme de commande centralisé 28 comprennent également un troisième verrou 78 (figures 2, 5 et 10) destiné à éviter que la liaison à baïonnette 32 entre les brides 18 et 20 ne puisse être déconnectée lorsque l'organe de commande 36 est manoeuvré dans le sens de l'ouverture de la double porte.

En complément à ce troisième verrou 78, l'organe de commande mobile présente une course morte, entre sa position normale de fermeture et une position intermédiaire de verrouillage de la liaison à baïonnette 32, au cours de laquelle la rotation de l'organe de commande 36 autour de son axe 38 est sans effet sur la double porte (la partie correspondante des rampes parallèles 44 est perpendiculaire à l'axe de la porte de cellule 22). Au cours de cette course morte, la rotation de l'organe de commande 36 a seulement pour effet d'actionner le troisième verrou 78, afin de verrouiller la liaison à baïonnette 32.

Comme l'illustrent les figures 5 et 10, ce troisième verrou 78 comporte une tige de blocage 80 qui est montée coulissante dans un alésage traversant 82 formé dans la bride de cellule 18 parallèlement à l'axe de pivotement 38. Un ressort de compression 84 est interposé entre un épaulement formé dans l'alésage 82 et une tête 86 de la tige de blocage 80, tournée vers l'intérieur de la cellule 10, de façon à appliquer en permanence cette tête 86 contre une surface de came 88 formée sur l'organe de commande mobile 36. L'étanchéité de la bride de cellule 18 est préservée au moyen d'un organe d'étanchéité 90 interposé entre cette bride et la tige de blocage 80.

La forme de la surface de came 88 est telle que, lorsque l'organe de commande mobile 36 occupe sa position de fermeture (figures 2 et 5), l'extrémité de la tige de blocage 80 opposée à la tête 86 affleure la face de la bride de cellule 18 tournée vers l'extérieur de la cellule 10, dans la rainure destinée à recevoir les oreilles de la bride de conteneur 20 lors de la solidarisation de ces deux brides à l'aide de la liaison à baïonnette 32.

Lors d'une rotation de l'organe de commande mobile 36 depuis cette position de fermeture jusqu'à la position intermédiaire de verrouillage de la liaison à baïonnette 32, la surface de came 88 déplace la tige de blocage 80 vers l'extérieur de la cellule 10 à l'encontre de l'action du ressort 84. Par conséquent et comme l'illustre la figure 10, la tige de blocage 80 fait saillie dans la rainure de la bride de cellule 18 destinée à recevoir les oreilles de la bride de conteneur 20, lorsque l'organe de commande mobile 36 se trouve dans sa position de verrouillage. L'emplacement de l'alésage 82 dans lequel est reçue la tige de blocage 80 est déterminé afin que cette tige s'oppose alors à la rotation des oreilles formées sur la bride de conteneur 20 dans le sens de la déconnexion de la liaison à baïonnette 32.

Les sécurités incorporées au mécanisme de commande centralisé 28 comprennent enfin un quatrième verrou 92 (figures 2, 3 et 11) permettant d'éviter toute possibilité de retour de l'organe de commande 36 de sa position de verrouillage de la liaison à baîonnette 32 vers sa position de fermeture de la double porte 25 dès que le décollement ou l'arrachement de cette dernière a commencé. En effet, si le retour de l'organe de commande mobile 36 dans la position de fermeture était possible à ce stade, un opérateur pourrait éventuellement déconnecter la bride de conteneur 20 de la bride de cellule 18 alors que la double porte a été enlevée.

Ce quatrième verrou 92 comprend tout d'abord un doigt de blocage 94 (figures 3 et 11) monté coulissant dans un alésage borgne 96 formé dans la bride de cellule 18 parallèlement à l'axe de l'ouverture délimitée par cette bride et qui débouche vers l'intérieur de la cellule 10. Un ressort de compression 98 interposé entre le doigt de blocage 94 et le fond de l'alésage borgne 96 tend à déplacer le doigt de blocage 94 vers l'intérieur de la cellule 10.

L'emplacement de l'alésage borgne 96 est tel qu'il est normalement en partie obturé par une excroissance de la pièce 42 lorsque la porte de cellule 22 est en place. Dans ces conditions, le doigt de blocage 94 est totalement escamoté dans l'alésage 96 par son appui contre une surface d'appui 100 (figure 3) de l'excroissance de la pièce 42.

Par ailleurs, une rainure de piégeage 102, formant un arc de cercle centré sur l'axe de pivotement 38, est usinée sur la face de l'organe de commande mobile 36 tournée vers la bride de cellule 18, de façon à se trouver en face de l'alésage 96 lorsque l'organe de commande occupe sa position de verrouillage, sa position extrème d'ouverture, ou une position intermédiaire entre ces deux positions. Les bords de cette rainure de piégeage 102 sont droits, de telle sorte que la venue en appui de l'extrémité du doigt de blocage 94 contre ces bords s'oppose à toute rotation de l'organe de commande mobile 36 dans la direction correspondante.

Dès que le décollement ou l'arrachement de la double porte 25 intervient, du fait de la coopération du galet 46 avec les rampes parallèles 44, lorsque l'organe de commande mobile 36 tourne autour de son axe 38 dans le sens inverse des aiguilles d'une montre de sa position de verrouillage vers sa position d'ouverture, la surface d'appui 100 s'éloigne de la bride de cellule 18, de telle sorte que le doigt de blocage 94 est repoussé dans la rainure de piégeage 102 par le ressort 98 (figure 11). La poursuite de la rotation de l'organe de commande mobile 36 dans le sens inverse des aiguilles d'une montre a pour effet de poursuivre l'arrachement de la double porte et de faire parcourir au doigt de blocage 94 la rainure de piégeage 102. La position d'ouverture est déterminée par la venue en butée du doigt de blocage 94 contre l'extrémité correspondante de la rainure de piégeage 102. Dans cette position, les formes complémentaires données à la pièce 42 et à l'organe de commande mobile 36 permettent de faire pivoter la double porte autour de la charnière 26.

Si un opérateur manoeuvre alors l'organe de commande mobile 36 dans le sens des aiguilles d'une montre, le doigt de blocage 94 vient en butée contre l'extrémité opposée de la rainure de piégeage 102 dès que l'organe de commande mobile atteint la position de verrouillage de la liaison à baîonnette 32. Par conséquent, il n'est pas possible d'amener l'organe de commande mobile 36 dans la position de fermeture qui autorise la déconnexion des brides 18 et 20.

Pour assurer la fermeture de la double porte avant de déconnecter le conteneur 12 de la cellule 10, on effectue des opérations inverses de celles qui viennent d'être décrites.

Bien entendu, les différentes sécurités incorporées au mécanisme de commande centralisé conforme à l'invention peuvent prendre des formes différentes de celles qui ont été décrites, sans sortir du cadre de l'invention. En outre, l'organe de commande peut être mobile en translation, et non en rotation.

## Revendications

1. Mécanisme de commande centralisé, à sécurités incorporées, pour un dispositif de transfert étanche entre deux volumes clos, ce dispositif comprenant une première et une deuxième brides (18,20) aptes à être solidarisées l'une de l'autre par une première liaison à baïonnette (32), et une première et une deuxième portes (22,24) obturant normalement des ouvertures délimitées respectivement par la première et la deuxième brides et aptes à être solidarisées l'une de l'autre par une deuxième liaison à baïonnette (34), ce mécanisme de commande comprenant :
- un organe de commande mobile (36), monté sur la première bride (18) de façon à pouvoir se déplacer entre une position de fermeture des portes (22,24) et une position d'ouverture des portes (22,24), en passant par une position intermédiaire de verrouillage de la première liaison à baïonnette (32) ; et
- un premier verrou (48) bloquant normalement l'organe de commande dans sa position de fermeture, ce mécanisme étant caractérisé par le fait que le premier verrou (48) est automatiquement déverrouillé par la présence de la deuxième porte (22) contre la première porte ; et par le fait qu'il comprend de plus :
- un système de rampes (44) interposé entre l'organe de commande (36) et la première porte (22), de façon à décoller cette dernière de la première bride lors d'un déplacement de l'organe de commande de sa position de verrouillage vers sa position d'ouverture ;
- un deuxième verrou (62) bloquant normalement l'organe de commande (36) dans sa position de fermeture, et automatiquement déverrouillé par la solidarisation de la deuxième bride (20) sur la première bride (18) par la première liaison à baïonnette (32) ;
- un troisième verrou (78) normalement déverrouillé lorsque l'organe de commande (36) est dans sa position de fermeture, et bloquant automatiquement la première liaison à baïonnette (32) dans un état de solidarisation des première et deuxième brides (18,20) lorsque l'organe de commande (36) se trouve entre ses positions de verrouillage et d'ouverture ou dans l'une de ces positions ; et
- un quatrième verrou (92), normalement déverrouillé lorsque l'organe de commande (36) est dans sa position de fermeture, et s'opposant automatiquement au retour de cet organe vers sa position de fermeture, après un décollement de la première porte (22) commandé par le système de rampes (44), lorsque l'organe de commande se trouve entre ses positions de verrouillage et d'ouverture ou dans l'une de ces positions.

2. Mécanisme de commande selon la revendication 1, caractérisé par le fait que le premier verrou (48) comprend un premier organe de blocage mobile (50) supporté par la première porte (22) du côté opposé à la deuxième porte (24), cet organe de blocage comportant une première tige de commande (54) qui traverse la première porte, et une partie de blocage (56) apte à coopérer avec une partie complémentaire (58) de l'organe de commande (36), lorsque cet organe occupe sa position de fermeture et lorsque la deuxième porte ne repousse pas la tige de commande, pour assurer le blocage de l'organe de commande.

3. Mécanisme de commande selon l'une quelconque des revendications 1 et 2, caractérisé par le fait que le deuxième verrou (62) comprend une première tige de blocage (64) montée coulissante dans un alésage (66) de l'organe de commande (36) ; un premier moyen élastique (68) tendant à déplacer cette tige de blocage vers la première bride (18), de façon à l'introduire partiellement dans un alésage traversant (72) formé dans cette bride, lorsque l'organe de commande occupe sa position de fermeture ; et une deuxième tige de commande (70) montée coulissante dans cet alésage traversant, de façon à faire saillie sur une face de la première bride tournée vers la deuxième bride, en un emplacement tel que cette tige de commande n'est repoussée, pour autoriser une rotation de l'organe de commande, que lorsque la première liaison à baîonnette (32) est verrouillée.

4. Mécanisme de commande selon l'une quelconque des revendications précédentes, caractérisé par le fait que le troisième verrou (78) comprend une deuxième tige de blocage (80) montée coulissante dans un deuxième alésage (82) de la première bride (18), des deuxièmes moyens élastiques (84) appliquant une extrémité de cette deuxième tige de blocage contre une surface de came (88) formée sur l'organe de commande, de telle sorte que l'extrémité opposée de la deuxième tige de blocage soit effacée dans le deuxième alésage lorsque l'organe de commande est en position de fermeture, et fasse saillie sur une face de la première bride tournée vers la deuxième bride, en un emplacement tel qu'elle bloque la première liaison à baîonnette (32) dans un état verrouillé, lorsque l'organe de commande se trouve entre les positions de verrouillage et d'ouverture, ou dans une de ces positions.

5. Mécanisme de commande selon l'une quelconque des revendications précédentes, caractérisé par le fait que le quatrième verrou (92) comprend un doigt de blocage (94) monté coulissant dans un troisième alésage (96) de la première bride, des troisièmes moyens élastiques (98) tendant à appliquer le doigt de blocage contre une face en regard de l'organe de commande, une rainure de piégeage (102) formée dans cette face en regard, de façon à se trouver en face du doigt de blocage lorsque l'organe de commande se trouve entre les positions de verrouillage et d'ouverture ou dans l'une de ces positions, et une surface d'appui (100) liée à la première porte (22), maintenant le doigt de blocage (94) en totalité dans le troisième alésage (96) tant que la première porte n'est pas décollée de la première bride.

6. Mécanisme de commande selon l'une quelconque des revendications précédentes, caractérisé par le fait que le système de rampes comprend deux rampes parallèles (44), en vis-à-vis, liées à la première porte (22), et un galet (46) porté par l'organe de commande (36) et coopérant simultanément avec ces deux rampes parallèles.

7. Mécanisme de commande selon les revendications 5 et 6, caractérisé par le fait que la surface d'appui (100) ainsi que les rampes parallèles (44) sont formées sur une pièce (42) apte à être fixée sur une face de la première porte (22) opposée à la deuxième porte (24), cette pièce supportant également le premier verrou (48).

8. Mécanisme de commande selon l'une quelconque des revendications précédentes, caractérisé par le fait que l'organe de commande (36) est un organe pivotant, monté sur une face de la première bride (18) opposée à la deuxième bride (20) par un axe de pivotement (38).

9. Mécanisme de commande selon l'une quelconque des revendications précédentes, caractérisé par le fait que l'organe de commande (36) est muni d'un levier de commande manuel (40).

## Patentansprüche

1. Zentraler Steuermechanismus mit eingebauten Sicherheitsvorrichtungen für eine dichte Vorrichtung zur Übertragung zwischen zwei abgeschlossenen Räumen, wobei diese Vorrichtung zwei Flansche enthält (18, 20), die miteinander über eine erste Bajonettverbindung (32) fest verbunden werden können, und aus zwei Türen (22, 24), die normalerweise die Öffnungen verschließen, die durch den ersten und den zweiten Flansch abgegrenzt werden, und miteinander durch eine zweite Bajonettverbindung (34) fest miteinander verbunden werden können, wobei dieser Mechanismus dadurch gekennzeichnet ist, daß er folgende Teile umfaßt:
- ein bewegliches Steuerteil (36), das an dem ersten Flansch (18) in der Form montiert ist, daß es zwischen einer Schließ- und einer Öffnungsstellung verfahren werden kann, wobei dieses Teil eine Verriegelungszwischenstellung durchläuft;
- ein Rampensystem (44), das sich zwischen dem Steuerteil (36) und der ersten Tür (22) befindet, so daß diese Tür des ersten Flansches beim Verfahren des Steuerteils von der Verriegelungsstellung zur Öffnungsstellung abgehoben wird;
- einen Riegel (48), der im Normalzustand das Steuerteil (36) in der Schließstellung blockiert, und das automatisch entriegelt wird, wenn sich die zweite Tür (24) gegenüber der ersten Tür (22) befindet;
- einen zweiten Riegel (62), der im Normalzustand das Steuerteil (36) in der Schließstellung blockiert, und durch die feste Verbindung des zweiten Flansches (20) mit dem ersten Flansch (18) über die erste Bajonettverbindung (32) entriegelt wird;
- einen dritten Riegel (78), der im Normalzustand entriegelt ist, wenn sich das Steuerteil (36) in der Schließstellung befindet, und automatisch die erste Bajonettverbindung (32) in einem Zustand blockiert, in dem der erste und zweite Flansch (18, 20) miteinander verbunden sind, wenn sich das Steuerteil (36) zwischen der Verriegelungs- und der Öffnungsstellung oder in einer dieser Stellungen befindet; und
- einen vierten Riegel (92), der im Normalzustand entriegelt ist, wenn sich das Steuerteil (36) in der Schließposition befindet, und sich automatisch beim Rückzug dieses Steuerteils in Richtung der Schließposition entgegenstellt, und zwar nach dem Abheben der ersten von dem Rampensystem (44) gesteuerten Tür (22), wenn sich das Steuerteil zwischen der Verriegelungs- und der Öffnungsstellung oder in einer dieser Stellungen befindet.

2. Steuermechanismus nach Anspruch 1, dadurch gekennzeichnet, daß der erste Riegel (48) ein bewegliches Arretierteil (50) enthält, das durch die erste Tür (22) auf der Seite gestützt wird, die gegenüber der zweiten Tür (24) liegt, wobei dieses Arretierteil eine Steuerstange (54) enthält, die die erste Tür durchquert, und ein Arretierteil (56), das mit dem Gegenstück (58) des Steuerteils (36) zusammenwirken kann, wenn dieses Teil die Schließstellung einnimmt und wenn die zweite Tür die Steuerstange nicht zurückstößt, um die Blockierung des Steuerteils zu gewährleisten.

3. Steuermechanismus nach einem beliebigen der Ansprüche 1 und 2, dadurch gekennzeichnet, daß der zweite Riegel (62) eine Arretierstange (64) enthält, die in einer Bohrung (66) verschiebbar in dem Steuerteil (36) montiert ist, wobei eine elastische Vorrichtung (68) dazu neigt, diese Arretierstange in Richtung des ersten Flansches (18) so zu verschieben, daß diese teilweise in eine durchquerende Bohrung (72) eingeführt wird, die in den Flansch eingearbeitet ist, wenn sich das Steuerteil in der Schließstellung befindet, sowie ein zweite Steuerstange (70), die in dieser durchquerenden Bohrung gleitbar in der Weise montiert ist, daß sie über der Fläche des ersten Flansches herausragt, die in Richtung des zweiten Flansches gedreht ist, und zwar an einer solchen Stelle, daß diese Steuerstange nur dann zurückgestoßen wird, damit sich das Steuerteil drehen kann, wenn die erste Bajonettverbindung (32) verriegelt ist.

4. Steuermechanismus nach einem beliebigen der vorangegangenen Ansprüche, dadurch gekennzeichnet, daß der dritte Riegel (78) eine zweite Arretierstange (80) enthält, die gleitbar in einer zweiten Bohrung (82) des ersten Flansches (18) montiert ist, sowie zweite elastische Vorrichtungen (84), die ein Ende dieser zweiten Arretierstange gegen eine Nockenfläche (88) drückt, die in das Steuerteil eingearbeitet ist, und zwar auf diese Weise, daß das gegenüberliegende Ende der zweiten Arretierstange in die zweite Bohrung zurückgeschoben wird, wenn sich das Steuerteil in der Schließstellung befindet, wobei die Stange über einer Fläche des ersten, in Richtung des zweiten Flansches gedrehten Flansches hervorsteht, und dies an einer Stelle, wo sie die erste Bajonettverbindung (32) in einem verriegelten Zustand blockiert, wenn sich das Steuerteil zwischen der Verriegelungs- und der Öffnungsstellung oder in einer dieser Stellungen befindet.

5. Steuermechanismus nach einem beliebigen der vorangegangenen Ansprüche, dadurch gekennzeichnet, daß der vierte Riegel (92) einen Arretierstift (94) enthält, der gleitbar in einer dritten Bohrung (96) des ersten Flansches montiert ist, wobei die dritten elastischen Vorrichtungen (98) bestrebt sind, den Arretierstift gegen eine Fläche zu drücken, die sich gegenüber dem Steuerteil befinden, und in diese gegenüberliegende Fläche eine Aufnahmenut (102) so eingearbeitet ist, daß sie sich gegenüber des Arretierstiftes befindet, wenn sich das Steuerteil zwischen der Verriegelungs- und Öffnungsstellung oder in einer dieser Stellungen befindet, sowie gekennzeichnet durch eine Stützfläche (100), die mit der ersten Tür (22) verbunden ist, wobei sich nun der Arretierstift (94) ganz in der dritten Bohrung (96) befindet, während die erste Tür von dem ersten Flansch nicht abgehoben ist.

6. Steuermechanismus nach einem beliebigen der vorangegangenen Ansprüche, dadurch gekennzeichnet, daß das Rampensystem zwei parallele Rampen besitzt (44), die sich gegenüber liegen und mit der ersten Tür (22) verbunden sind, sowie eine Rolle (46), die von dem Steuerteil (36) gehalten wird und gleichzeitig mit diesen beiden parallelen Rampen zusammenwirkt.

7. Steuermechanismus nach den Ansprüchen 5 und 6, dadurch gekennzeichnet, daß die Stützfläche (100) sowie die parallelen Rampen (44) in ein Teil (42) eingearbeitet sind, das an einer Fläche der ersten Tür (22) befestigt werden kann, die sich gegenüber der zweiten Tür (24) befindet, wobei dieses Teil auch den ersten Riegel (48) stützt.

8. Steuermechanismus nach einem beliebigen der vorangegangenen Ansprüche, dadurch gekennzeichnet, daß das Steuerteil (36) ein schwenkbares Teil ist, welches an einer Fläche des erste Flansches (18) gegenüber dem zweiten Flansch (20) über eine Kippachse (38) montiert ist.

9. Steuermechanismus nach einem beliebigen der vorangegangenen Ansprüche, dadurch gekennzeichnet, daß das Steuerteil (36) mit einem Handsteuerhebel (40) versehen ist.

## Claims

1. Centralized control mechanism having incorporated safety means, for a device for the tight transfer between two closed volumes, said device incorporating a first and a second flanges (18, 20) which can be interlocked with one another by a first bayonet joint (32), and a first and second doors (22, 24) normally closing the openings defined respectively by the first and second flanges and which can be locked to one another by a second bayonet joint (34), said control mechanism comprising:
- a mobile control member (36) mounted on the first flange (18) so as to be displaceable between a closed position of the doors (22, 24) and an open position of the doors (22, 24), whilst passing through an intermediate locking position of the first bayonet joint (32) and
- a first bolt normally locking the control member in its closed position,
- said mechanism being characterized in that the first bolt (48) is automatically unlocked by the presence of the second door (22) against the first door, and by the fact that it also comprises:
- a system of ramps (44) interposed between the control member (36) and the first door (22), so as to separate the latter from the first flange during a displacement of the control member from its locking position to its open position,
- a second bolt (62) normally locking the control member (36) in its closed position and automatically unlocked by the interlocking of the second flange (20) with the first flange (18) by the first bayonet joint (32),
- a third bolt (78) normally unlocked when the control member (36) is in its closed position and automatically locking the first bayonet joint (32) in a state of interlocking the first and second flanges (18, 20) when the control member (36) is between its locking and open positions or in one of these positions and
- a fourth bolt (92) normally unlocked when the control member (36) is in its closed position and automatically opposing the return of said member to its closed position following a separation of the first door (22) controlled by the system of ramps (44), when the control member is between its locking and open positions or in one of these positions.

2. Control mechanism according to claim 1, characterized in that the first bolt (48) comprises a first mobile locking member (50) supported by the first door (22) on the side opposite to the second door (24), said locking member having a first control rod (54) which traverses the first door and a locking part (56) able to cooperate with a complementary part (58) of the control member (36), when said member occupies its closed position and when the second door does not force back the control rod in order to ensure the locking of the control member.

3. Control mechanism according to one of the claims 1 and 2, characterized in that the second bolt (62) comprises a first locking rod (64) slidingly mounted in a bore (66) of the control member (36), a first elastic means (68) tending to displace said locking rod towards the first flange (18), so as to partly introduce it into a through bore (72) formed in said flange, when the control member occupies its closed position and a second control rod (70) slidingly mounted in said through bore, so as to project on one face from the first flange turned towards the second flange, at a location such that said control rod is only forced back, to allow a rotation of the control member, when the first bayonet joint (32) is locked.

4. Control mechanism according to any one of the preceding claims, characterized in that the third bolt (78) comprises a second locking rod (80) slidingly mounted in a second bore (82) of the first flange (18), second elastic means (84) applying one end of said second locking rod against a cam surface (88) formed on the control member, in such a way that the opposite end of the second locking rod is retracted into the second bore when the control member is in the closed position, and projects on one face of the first flange turned towards the second flange, at a location such that it locks the first bayonet joint (32) in a locked position, when the control member is between the locking and open positions or is in one of these positions.

5. Control mechanism according to any one of the preceding claims, characterized in that the fourth bolt (92) comprises a locking finger (94) slidingly mounted in a third bore (96) of the first flange, third elastic means (98) tending to apply the locking finger to a facing face of the control member, a trapping slot (102) formed in said facing face, so as to face the locking finger when the control member is between the locking and open positions or is in one of these positions, and a bearing surface (100) linked with the first door (22), maintaining the locking finger (94) entirely in the third bore (96) when the first door is not separated from the first flange.

6. Control mechanism according to any one of the preceding claims, characterized in that the system of ramps comprises two, facing, parallel ramps (44) connected to the first door (22), and a roller (46) carried by the control member (36) and simultaneously cooperating with these two parallel ramps.

7. Control mechanism according to claims 5 and 6, characterized in that the bearing surface (100) and the parallel ramps (44) are formed on a part (42) which can be fixed to one face of the first door (22) opposite to the second door (24), said part also supporting the first bolt (48).

8. Control mechanism according to any one of the preceding claims, characterized in that the control member (36) is a pivoting member, mounted on a face of the first flange (18) opposite to the second flange (20), by means of a pivot pin (38).

9. Control mechanism according to any one of the preceding claims, characterized in that the control member (36) is provided with a manual control lever (40).
